# EUROPEAN PATENT SPECIFICATION

(11) **EP 1 726 806 B1**
(45) Date of publication and mention of the grant of the patent: **17.03.2010**
(21) Application number: 06009461.2
(22) Date of filing: 08.05.2006
(51) Int. Cl.: F02D 41/02, F02D 41/40

(54) **Particle filter regeneration apparatus and method for internal combustion engine**
Vorrichtung und Verfahren zur Regeneration eines Partikelfilters für eine Brennkraftmaschine
Système et procédé de regéneration d'un filtre à particules pour un moteur à combustion interne

(30) Priority: 13.05.2005 JP 2005141624
(43) Date of publication of application: 29.11.2006
(73) Proprietor: HONDA MOTOR CO., LTD., Tokyo 107-8556 (JP)
(72) Inventor: Ishihara, Yoshinori, c/o Honda R&D Co., Ltd., Wako-shi, Saitama, 351-0193 (JP)
(74) Representative: Prechtel, Jörg

(56) References cited:
- EP-A- 1 517 029
- EP-A- 1 577 524
- EP-A- 1 584 805
- US-A1- 2004 206 070
- PATENT ABSTRACTS OF JAPAN vol. 1998, no. 03, 27 February 1998 (1998-02-27) & JP 09 287434 A (MATSUSHITA ELECTRIC IND CO LTD), 4 November 1997 (1997-11-04)

## Description

### BACKGROUND OF THE INVENTION

### Field of the Invention:

The present invention relates to an exhaust gas purifying apparatus and method for purifying exhaust gases by collecting particulate matters within the exhaust gases by a filter in a diesel engine and the like.

### Description of the Prior Art:

An exhaust gas purifying apparatus for a diesel engine and the like, known in the past, comprises a filter in an exhaust system for collecting particulate matters within exhaust gases. Also, as conventionally known, Laid-open Japanese Patent Application No. 9-287434, for example, discloses the regeneration of a filter by burning particulate matters deposited in the filter in order to prevent a reduction in power and a degradation in fuel efficiency of an engine due to an increased exhaust pressure when the particulate matters are excessively deposited in the filter.

The foregoing exhaust gas purifying apparatus comprises a regeneration unit for regenerating the filter. The regeneration unit comprises micro-wave supplying means for heating the filter to burn particulate matters; gas supplying means for supplying the filter with a gas including oxygen through a gas supply path; an ambient air introducing valve for introducing ambient air into the filter through the air supply path; a gas recirculation path for recirculating exhaust gases exhausted from the filter to the gas supply path; a bypass path for bypassing the filter; a variety of switching valves for switching these paths; and the like.

When the filter is not regenerated, exhaust gases exhausted from the engine is passed through the filter by switching the paths by the switching valve to collect particulate matters within the exhaust gases in the filter. When the particulate matters deposited in the filter reach a predetermined amount, the exhaust gases are passed to the bypass path to bypass the filter, while the micro-wave supplying means is activated to heat the filter to burn the particulate matters deposited therein, thus regenerating the filter. During the regeneration, the burning of the particulate matters is promoted by supplying a gas to the filter by the gas supplying means with the gas supply path remaining opened, and opening the ambient air introducing valve to introduce ambient air into the filter. Also, the atmospheric temperature and atmospheric pressure are detected to correct the ambient air introducing valve for the opening in accordance with the detected temperature and pressure, to maintain a constant oxygen concentration of the gas supplied to the filter, thereby stably regenerating the filter.

However, in this conventional exhaust gas purifying apparatus, the filter regeneration unit is exclusively used for regenerating the filter. This results in an extra space required for mounting the filter regeneration unit, a higher manufacturing cost, and a failure in application to an exhaust gas purifying apparatus of a type which regenerates a filter, for example, bypost-injection, i.e., by injecting a fuel into a combustion chamber in an expansion stroke and an exhaust stroke of the engine.

Also, in this exhaust gas purifying apparatus, since the gas and ambient air for promoting the burning of particulate matters are directly supplied to the filter, the correction of the atmospheric air introducing valve for the opening in accordance with the atmospheric temperature and atmospheric pressure as mentioned above is effective for maintaining a constant oxygen concentration of the gas supplied to the filter to ensure stable regeneration of the filter. However, in a post-injection type regeneration unit, for example, intake air is not directly supplied to a filter but part thereof is burnt in a combustion camber together with a fuel before it is supplied to the filter. For this reason, even if an intake air amount is corrected using a conventional correction approach, both the combustion chamber and the filter cannot be appropriately supplied with required amounts of oxygen, possibly resulting in a failure of stably ensuring the combustion in the combustion chamber or the filter.

In EP-A-1584805 as prior art pursuant to Art. 54(3) EPC the throttle valve is not narrowed automatically during the regeneration operation of a particulate filter, instead the EGR is closed. The intake air temperature, the engine temperature and the atmospheric pressure are not used for correcting the throttle valve opening during regeneration (post-injection).

EP-A-1577524 as prior art pursuant to Art. 54(3) EPC discloses several sensors, for example for detecting accelerator pedal opening, intake air amunt, intake air pressure at a collector part etc., but no specific atmospheric pressure sensor. During regeneration, the fuel injection amount is increased. During the regeneration, the throttle opening is decreased (narrowed). But during regeneration, the decreased throttle opening is not corrected in accordance with at least one of engine temperature, atmospheric pressure and intake air temperature.

In EP-A-1517029, on which the preamble of claims 1 and 3 is based, post-injection is performed for rising exhaust temperature for filter generation. Thereby exhaust gas temperature is detected. During regeneration, the throttle opening is not narrowed. Instead, the catalyst bed temperature is detected by sensors.

In JP 09-287434 A, filter regeneration is done by controlling oxygen concentration upstream and downstream of said filter.

In US 2004/206070 A, a particulate filter is regenerated. Sensors for engine water temperature, air flow, exhaust gas temperature and pressure difference between upstream and downstream of the filter are disclosed. During regeneration, the throttle opening is not narrowed and this narrowed opening is not corrected.

### SUMMARY OF THE INVENTION

The present invention has been made to solve the problem as mentioned above, and it is an object of the invention to provide an exhaust gas purifying apparatus and method for an internal combustion engine which are capable of appropriately regenerating a filter by supplying intake air, neither too much nor too less, when the filter is regenerated by supplying an unburnt fuel into exhaust gases.

To achieve the above object according to a first aspect of the present invention, there is provided an internal combustion engine for purifying exhaust gases by collecting particulate matters included in the exhaust gases emitted from said internal combustion engine to an exhaust system, said exhaust gas purifying apparatus comprising: a filter disposed in said exhaust system for collecting particulate matters included in exhaust gases; regenerating operation executing means for burning particulate matters deposited in said filter to execute a regenerating operation for regenerating said filter; and an intake throttle valve for adjusting the amount of intake air flowing through an intake system of said internal combustion engine; and engine temperature detecting means for detecting a temperature of said internal combustion engine, atmospheric pressure detecting means for detecting the atmospheric pressure, and intake air temperature detecting means for detecting the temperature of intake air; characterized by intake air control means for controlling said intake throttle valve to narrow down an opening of said intake throttle valve during execution of the regenerating operation by said regenerating operation executing means and supplying unburnt fuel into the exhaust gas; and correcting means for correcting the opening of said intake throttle valve during the regeneration operation in accordance with at least one of the temperature of said internal combustion engine, the atmospheric pressure, and the intake air temperature detected by at least one of said detecting means.

According to this exhaust gas purifying apparatus for an internal combustion engine, particulate matters in exhaust gases are collected by the filter. Also, the regenerating operation executing means executes the regenerating operation to supply an unburnt fuel into the exhaust gases and burn the articulate matters deposited in the filter, thereby regenerating the filter. Also, during the regenerating operation, the intake air control means controls the intake throttle valve to narrow down the opening thereof to reduce the intake air amount. Since the intake air amount is reduced by narrowing down the opening of the intake throttle valve during the regenerating operation, the air/fuel ratio can be controlled toward the richer side to increase the combustion temperature and exhaust gas temperature in the internal combustion engine to heat the filter, thereby stably burning the particulate matters in the filter.

Also, the temperature of the internal combustion engine, atmospheric pressure, and intake air temperature is detected to correct the opening of the intake throttle valve in accordance with the detected at least one parameter during the regenerating operation. The intake air varies in density between a flatland and a highland, or as the intake air varies in temperature. Therefore, by correcting the opening of the intake throttle valve in accordance with the detected atmosphere and temperature of intake air, an amount of oxygen required for regenerating the filter can be supplied neither too much nor too less, while compensating for the influence due to variations in density of intake air. As a result, a stable combustion of particulate matters can be ensured in the filter, to appropriately regenerate the filter. In addition, variations in the temperature of the internal combustion engine affect the temperature of exhaust gases and the combustion in the combustion chamber of the internal combustion engine as well. Accordingly, by correcting the opening of the intake throttle valve in accordance with the detected temperature of the internal combustion engine a stable combustion can be ensured in the combustion chamber while compensating for the influence due to the temperature of the internal combustion engine.

To achieve the above object, according to a second aspect of the present invention, there is provide a method of purifying exhaust gases in an internal combustion engine by collecting particulate matters included in the exhaust gases emitted from said internal combustion engine to an exhaust system, said method comprising the steps of: collecting particulate matters included in exhaust gases by a filter; burning particulate matters deposited in said filter to execute a regeneration operation for regenerating said filter; adjusting the amount of intake air flowing through an intake system of said internal combustion engine by an intake throttle valve and supplying unburnt fuel into the exhaust gas; and detecting a temperature of said internal combustion engine, the atmospheric pressure, and the temperature of intake air; characterized by narrowing down an opening of said intake throttle valve during execution of a regenerating operation; and correcting the opening of said intake throttle valve during the regeneration operation in accordance with at least one of the temperature of said internal combustion engine, the atmospheric pressure, and the intake air temperature.

This method of purifying exhaust gases provides the same advantageous effects as described above concerning the exhaust gas purifying apparatus according to the first aspect of the invention.

Preferably, in the exhaust gas purifying apparatus for an internal combustion engine described above, the at least one detecting means is the engine temperature detecting means, wherein the correcting means corrects the opening of the intake throttle valve to be larger as the temperature of the internal combustion engine is lower.

According to this preferred embodiment of the exhaust gas purifying apparatus, since the opening of the intake throttle valve is corrected to be larger as the temperature of the internal combustion engine is lower during the regenerating operation, it is possible to prevent misfire during the regenerating operation without fail, while compensating for the influence of the temperature of the internal combustion engine, to ensure a stable combustion in the combustion chamber particularly at low temperatures.

Preferably, in the method of purifying exhaust gases in an internal combustion engine described above, the step of detecting includes detecting the temperature of the internal combustion engine, wherein the step of correcting includes correcting the opening of the intake throttle valve to be larger as the temperature of the internal combustion engine is lower.

This preferred embodiment of the method of purifying exhaust gases provides the same advantageous effects as described above concerning the exhaust gas purifying apparatus according to the first aspect of the invention.

### BRIEF DESCRIPTION OF THE DRAWINGS

Fig. 1 is a diagram generally illustrating an exhaust gas purifying apparatus to which the present invention is applied, together with an internal combustion engine;
Fig. 2 is a flow chart illustrating a filter regeneration control process;
Fig. 3 is a flow chart illustrating a subroutine for calculating an integrated value of deposited particulate matter amount;
Fig. 4 is a flow chart illustrating a subroutine for calculating a target opening for a throttle valve during a regenerating operation;
Fig. 5 is an example of a table for calculating an atmospheric pressure correction coefficient;
Fig. 6 is an example of a table for calculating an intake air temperature correction coefficient; and
Fig. 7 is an example of a table for calculating a water temperature correction coefficient.

### DETAILED DESCRIPTION OF THE EMBODIMENT

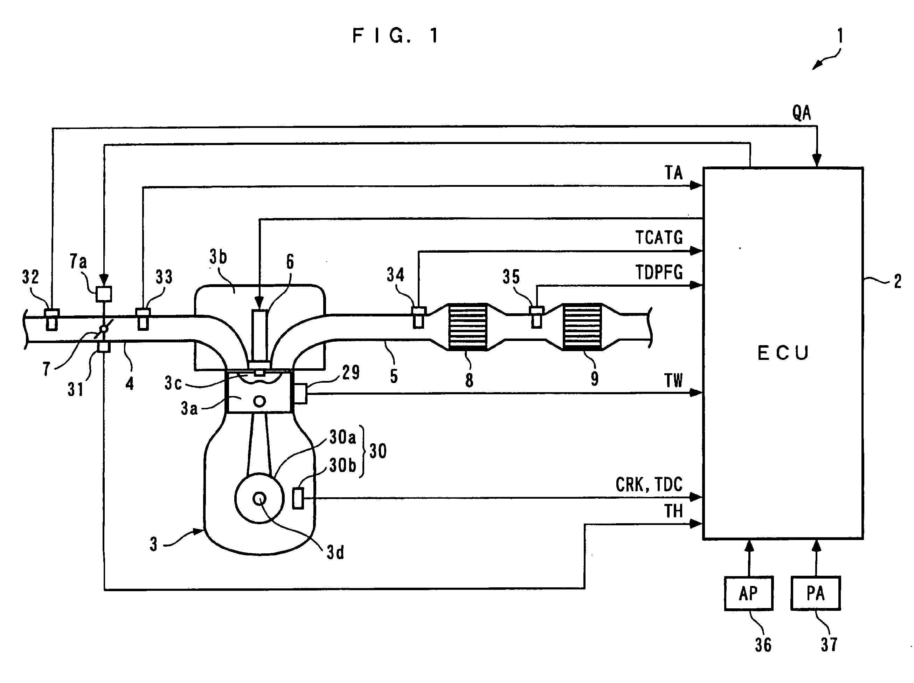

In the following, a preferred embodiment of the present invention will be described in detail with reference to the accompanying drawings. Fig. 1 illustrates an exhaust gas purifying apparatus 1 to which the present invention is applied, together with an internal combustion engine (hereinafter called the "engine") 3. The engine 3 is, for example, a four-cylinder engine equipped in a vehicle, not shown.

A combustion chamber 3c is formed between a piston 3a and a cylinder head 3b of the engine 3. An intake pipe 4 and an exhaust pipe 5 (exhaust system) are connected respectively to the cylinder head 3b, and a fuel injection valve (hereinafter called the "injector") 6 is attached to face the combustion chamber 3c.

The injector 6 is disposed in a central region of the ceiling of the combustion chamber 3c, and is connected to a high-pressure pump and a fuel tank (none of which is shown) in order through a common rail. A fuel within the fuel tank is increased in pressure by the high-pressure pump, and then is sent to the injector 6 through the common rail for injection into the combustion chamber 3c from the injector 6. An injected fuel amount QINJ and an injection timing of the injector 6 are set by an ECU 2, and are controlled by driving signals from the ECU 2 to ensure the set injected fuel amount QINJ and injection timing.

An engine water temperature sensor 29 is mounted on the body of the engine 3. The engine water temperature sensor 29 detects a temperature TW of cooling water (hereinafter called the "engine water temperature") which circulates within a cylinder block of the engine 3, and outputs its detection signal to the ECU 2.

A magnet rotor 30a is attached to a crank shaft 3d of the engine 3, and a crank angle sensor 30 is made up of this magnet rotor 30a and an MRE pickup 30b. The crank angle sensor 30 outputs a CRK signal and a TDC signal, both of which are pulse signals, to the ECU 2 as the crank shaft 3d rotates. The CRK signal is outputted every predetermined crank angle (for example, every 30 °). The ECU 2 calculates the rotational speed of the engine 3 (hereinafter called the "engine rotational speed") NE based on the CRK signal. The TDC signal indicates that the piston 3a of each cylinder is at a predetermined crank angle position near the top dead center (TDC) at the start of an intake stroke, and is outputted every 180 ° of crank angle in the four-cylinder type of this example.

A throttle valve (intake throttle valve) 7 is disposed at a position near the combustion chamber 3c in the intake pipe 4. An actuator 7a, comprising a DC motor, for example, is connected to the throttle valve 7. An opening TH of the throttle valve 7 (hereinafter called the "throttle opening") is controlled by the ECU 2 which controls the duty ratio of a current supplied to the actuator 7a. The throttle opening TH is detected by a throttle opening sensor 31 which outputs its detection signal to the ECU 2.

The intake pipe 4 is also provided with an air flow sensor 32 at a position upstream of the throttle valve 7 and an intake air temperature sensor 33 at a position downstream of the throttle valve 7. The air flow sensor 32 detects the amount QA of intake air, and outputs its detection signal to the ECU 2. The intake air temperature sensor 33 in turn detects the temperature TA of intake air (hereinafter called the "intake air temperature"), and outputs its detection signal to the ECU 2.

The exhaust pipe 5 is provided with an oxidation catalyst 8 and a filter 9 in this order from the upstream side. The oxidation catalyst 8 oxidizes HC and CO within exhaust gases to purify the exhaust gases. The filter 9 collects particulate matters such as soot within exhaust gases to reduce the particulate matters emitted into the atmosphere. The filter 9 carries a catalyst (not shown) similar to the oxidation catalyst 8 on the surface thereof.

The exhaust pipe 5 is further provided with a first exhaust gas temperature sensor 34 and a second exhaust gas temperature sensor 35 at positions immediately upstream of the oxidation catalyst 8 and immediately upstream of the filter 9, respectively. The first exhaust gas temperature sensor 34 detects the temperature TCATG of exhaust gases upstream of the oxidation catalyst 8 (hereinafter called the "pre-catalyst gas temperature"), and outputs its detection signal to the ECU 2. The second exhaust gas temperature sensor 35 detects the temperature TDPFG of exhaust gases upstream of the filter 9 (hereinafter called the "pre-filter gas temperature"), and outputs its detection signal to the ECU 2.

The ECU 2 is further supplied with a detection signal indicative of an operation amount AP of an accelerator pedal (not shown) (hereinafter called the "accelerator opening") from an accelerator opening sensor 36, and a detection signal indicative of the atmospheric pressure PA from an atmospheric pressure sensor 37, respectively.

The ECU 2 is based on a microcomputer which comprises an I/O interface, a CPU, a RAM, a ROM and the like.

The detection signals from a variety of the aforementioned sensors 29 - 37 are applied to the CPU after they have undergone A/D conversion and waveform shaping. The CPU determines the operating condition of the engine 3 with reference to these signals applied thereto in accordance with a control program stored in the ROM, as well as executes a variety of control operations for the engine 3, including those for controlling the injected fuel amount QINJ of the injector 6 and the throttle opening TH, and executes a regeneration control process for regenerating the filter 9.

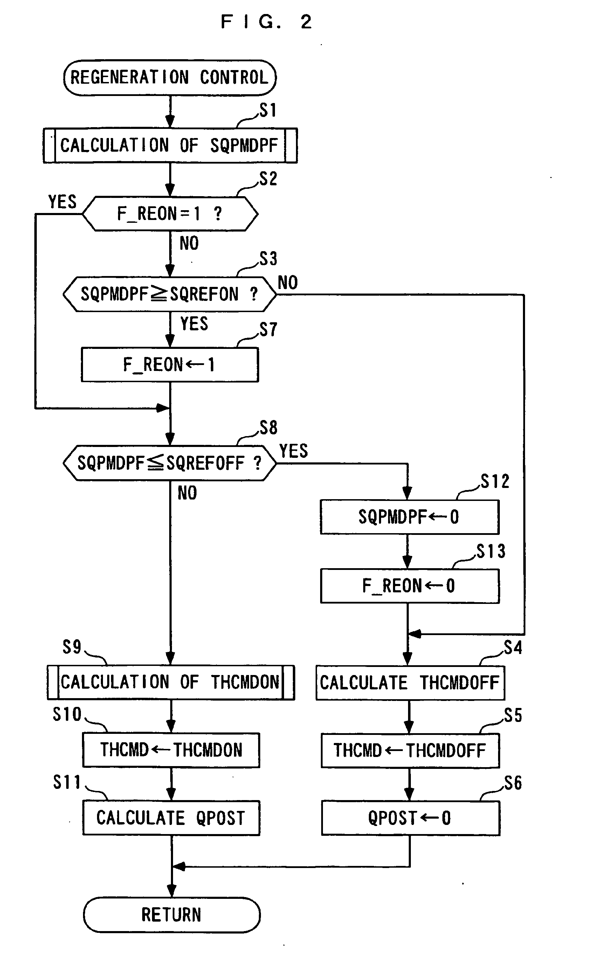

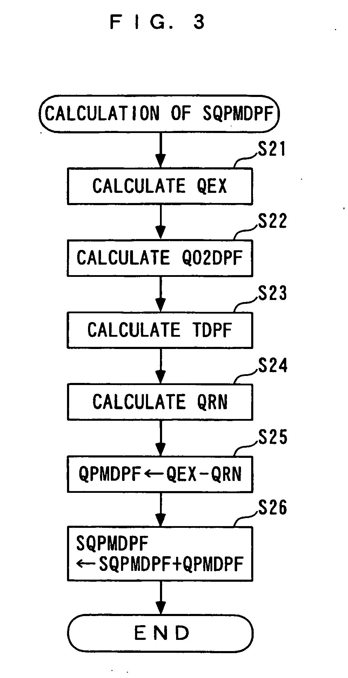

Fig. 2 is a flow chart illustrating the regeneration control process. This process is executed in synchronism with the application of the TDC signal. It should be noted that the operation for regenerating the filter 9 in this process relies on the post-injection for injecting a fuel into the combustion chamber 3c in an expansion stroke or an exhaust stroke of the engine 3, thereby supplying an unburnt fuel into exhaust gases to burn particulate matters deposited in the filter 9, for purposes of regenerating the filter 9. In this process, first at step 1 (labeled as "S1" in the figure. The same designation applies to the following description), a deposited particulate matter amount integrated value SQPMDPF is calculated. This particulate matter amount integrated value SQPMDPF is an estimate of the amount of particulate matters deposited in the filter 9 at that time, and is calculated through a subroutine illustrated in Fig. 3.

Referring now to Fig. 3, the amount QEX of particulate matters exhausted from the engine 3 is calculated per TDC, i.e. , one combustion at step 21. This calculation of the exhausted particulate matter amount QEX is made by searching an exhausted particulate matter amount map (not shown) in accordance with the engine rotational speed NE and injected fuel amount QINJ. The exhausted particulate matter amount map is created by finding the amount of particulate matters exhausted from the engine 3 in an experiment, and mapping the result of the experiment in accordance with the engine rotational speed NE and injected fuel amount QINJ. The injected fuel amount QINJ is determined by searching an injected fuel amount map (not shown) in accordance with the engine rotational speed NE and accelerator opening AP.

Next, a filter oxygen amount Q02DPF is calculated (step 22). This filter oxygen amount Q02DPF represents the amount of oxygen supplied to the filter 9, and is calculated from the injected fuel amount QINJ and intake air amount QA. Also, a filter temperature TDPF is calculated (step 23). This filter temperature TDPF represents the temperature internal to the filter 9, and is calculated in accordance with the intake air amount QA, filter pre-gas temperature TDPFG and the like.

Next, a regenerated particulate matter amount QRN is calculated (step 24). This particulate matter amount QRN represents the amount of particulate matters which are burnt in the filter 9 for regeneration in a normal operation in which no regenerating operation is performed or in the regenerating operation. The regenerated particulate matter amount QRN is calculated by searching a map (not shown) in accordance with the filter oxygen amount Q02DPF and filter temperature TDPF found at the aforementioned steps 22, 23, respectively. In this map, the regenerated particulate matter amount QRN is set to a larger value as the filter oxygen amount Q02DPF is larger, or as the filter temperature TDPF is higher because of higher easiness of burning the particulate matters.

Next, a deposited particulate matter amount QPMDPF per TDC is calculated by subtracting the regenerated PM amount QRN from the exhausted particulate matter amount PME calculated at step 21 (step 25). Next, the calculated deposited particulate matter amount QPMDPF is added to the deposited particulate matter amount integrated value SQPMDPF found up to the last time to calculate the currently deposited particulate matter amount integrated value SQPMDPF (step 26), followed by termination of the subroutine. As will be later described, the deposited particulate matter amount integrated value SQPMDPF is reset to zero when the filter 9 is regenerated.

Turning back to Fig. 2, at step 2 subsequent to step 1, it is determined whether or not a regeneration execution flag F_REON is "1." If the answer to step 2 is NO, indicating that the regenerating operation is not under way, it is determined whether or not the deposited particulate matter amount integrated value SQPMDPF calculated at step 1 is equal to or larger than a predetermined threshold value SQREFON (for example, nine grams) for determining the start of the regenerating operation (step 3). If the answer to step 3 is NO, indicating SQPMDPF<SQREFON, the flow proceeds to step 4 on the assumption that the regenerating operation is not performed because of a small amount of deposited particulate matters in the filter 9.

At step 4, a target opening THCMDOFF of the throttle valve 7 during a non-regenerating operation in accordance with the engine rotational speed NE and intake air amount QINJ. Next, the calculated target opening THCMDOFF is set to a target opening THCMD for the throttle valve 7 (step 5). When the target opening THCMD is set in this way, the duty ratio of a current supplied to the actuator 7a is controlled by the ECU 2 such that the throttle opening TH converges to the target opening THCMD. Next, a post-injection amount QPOST is set to zero (step 6), followed by termination of this process.

On the other hand, if the answer to step 3 is YES, indicating that the deposited particulate matter amount integrated value SQPMDPF reaches the threshold value SQREFON, the regeneration execution flag F_REON is set to "1" on the assumption that the regenerating operation will be started (step 7). Next, it is determined whether or not the deposited particulate matter amount integrated value SQPMDPF is equal to or smaller than a threshold value SQREFOFF for determining the end of the regenerating operation (step 8). This threshold value SQREFOFF is set to a predetermined value near zero.

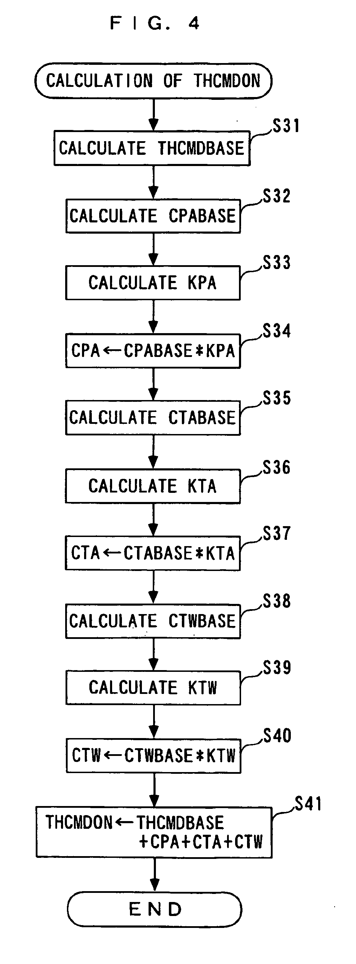

When the regenerating operation is started, the answer to step 8 is NO, causing the flow to proceed to step 9, where a target opening THCMDON is calculated for the throttle valve 7 during the regenerating operation. This calculation is made through a subroutine illustrated in Fig. 4.

Referring now to Fig. 4, a basic value THCMDBASE is first calculated for the target opening THCMDON at step 31. This basic value THCMDBASE corresponds to a target opening to which the throttle valve 7 should be set at a normal temperature and a normal pressure, and is calculated by searching a basic value map (not shown) in accordance with the engine rotational speed NE and injected fuel amount QINJ. In this basic value map, the basic value THCMDBASE is set to a smaller value than the target opening THCMDOFF during the non-regenerating operation calculated at the aforementioned step 4 in order to narrow down the throttle valve opening TH to decrease the intake air amount QA during the regenerating operation.

Then, at steps 32 - 40, an atmospheric pressure correction term CPA, an intake air temperature correction term CTA, and a water temperature correction term CTW are calculated for use as correction terms for the basic value THCMDBASE.

First at step 32, a basic value CPABASE is calculated for the atmospheric pressure correction term CPA. This basic value CPABASE determines a weight for the atmospheric pressure correction to the basic value THCMDBASE of the target opening THCMDON, and is calculated by searching a corresponding map (not shown) in accordance with the engine rotational speed NE and injected fuel amount QINJ.

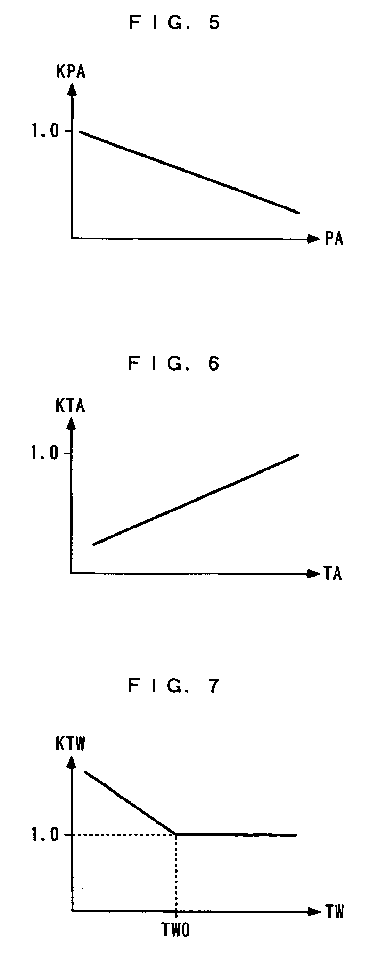

Next, an atmospheric pressure correction coefficient KPA is calculated by searching an atmospheric pressure correction table of Fig. 5 in accordance with the atmospheric pressure PA (step 33). In this atmospheric pressure correction table, the atmospheric pressure correction coefficient KPA is set to a larger value as the atmospheric pressure PA is lower. This is intended to ensure the filter oxygen amount Q02DPF required for the regeneration of the filter 9 by compensating for a lower filter oxygen amount Q02DPF due to a lower density of intake air in a highland. Next, the basic value CPABASE calculated at step 32 is multiplied by the calculated atmospheric pressure correction coefficient KPA to calculate the atmospheric pressure correction term CPA (step 34).

Likewise, at step 35, a basic value CTABASE for the intake air temperature correction term CTA is calculated by searching a corresponding map (not shown) in accordance with the engine rotational speed NE and injected fuel amount QINJ. Next, an intake air temperature correction coefficient KTA is calculated by searching an intake air temperature correction table of Fig. 6 in accordance with the intake air temperature TA (step 36). In this intake air temperature correction table, the intake air temperature correction coefficient KTA is set to a larger value as the intake air temperature TA is higher. This is intended to ensure the filter oxygen amount Q02DPF required for the regeneration of the filter 9 by compensating for a similarly lower density of the intake air as the intake air temperature is higher. Next, the basic value CTABASE calculated at step 35 is multiplied by the calculated intake air temperature correction coefficient KTA to calculate the intake air temperature correction term CTA (step 37).

Next, at step 38, a basic value CTWBASE for the water temperature correction term CTW is calculated by searching a corresponding map (not shown) in accordance with the engine rotational speed NE and injected fuel amount QINJ. Next, awater temperature correction coefficient KTW is calculated by searching a water temperature correction table of Fig. 7 in accordance with the engine water temperature TW (step 39).

In this water temperature correction table, the water temperature correction coefficient KTW is set to 1.0 when the engine water temperature TW is equal to or higher than a predetermined temperature TWO (for example, 60 ° C); to a value larger than 1. 0 when the engine water temperature is lower than the predetermined temperature TW; and to a larger value as the engine water temperature TW is lower. As the temperature of the engine 3 is lower, the engine is susceptible to an instable combustion state.
Particularly, when the throttle valve opening TA is narrowed down for the regenerating operation, an insufficient amount of intake air can be supplied to cause an instable combustion in the combustion chamber 3c, possibly resulting in misfire. Therefore, by setting the water temperature correction coefficient KTW to a larger value as the engine water temperature TW is lower to increase the intake air amount QA, it is possible to prevent the misfire during the regenerating operation without fail to ensure a stable combustion in the combustion chamber 3c.

Next, the basic value CTWBASE calculated at step 38 is multiplied by the calculated water temperature correction coefficient KTW to calculate the water temperature correction term CTW (step 40).

Next, the atmospheric pressure correction term CPA, intake air temperature correction term CTA, and water temperature correction term CTW, calculated at steps 34, 37, 40, respectively, are added to the basic value THCMDBASE calculated at step 31 to calculate the target opening THCMDON for the regenerating operation (step 41), followed by termination of this subroutine.

Turning back to Fig. 2, at step 10 subsequent to step 9, the target opening THCMDON for the regenerating operation, calculated as described above, is set to the target opening THCMD for the throttle valve 7. Next, the post-injection amount QPOST is calculated (step 11), followed by termination of this process. The post-injection amount QPOST is calculated in accordance with a predetermined feedback control algorithm such that the filter pre-gas temperature TDPFG converges to a predetermined target temperature (for example, 600 °C). In this way, the filter 9 is regenerated by maintaining the filter 9 in a high-temperature state, and burning particulate matters deposited therein.

On the other hand, if the answer to step 8 is YES, indicating that the deposited particulate matter amount integrated value SQPMDPF decreases to the threshold value SQREFOFF or less during the execution of the regenerating operation, the deposited particulate matter amount integrated value SQPMDPF is reset to zero on the assumption that the particulate matters deposited in the filter 9 have been sufficiently burnt so that the filter 9 has been regenerated (step 12). Also, the regeneration execution flag F_REON is set to "0" (step 13) to terminate the regenerating operation and execute the aforementioned steps 4 to 6.

As described above, according to this embodiment, the target opening THCMD for the throttle valve 7 is set to the smaller target opening THCMDON for the regenerating operation to narrow down the throttle opening TH to reduce the intake air amount QA during the regenerating operation. In this way, the air/fuel ratio is controlled toward the richer side to increase the combustion temperature and exhaust gas temperature in the engine 3, thereby making it possible to stably burn particulate matters in the filter 9.

Also, since the target opening THCMDON for the regenerating operation is corrected in accordance with the detected atmospheric pressure PA and intake air temperature TA, an amount of oxygen required to regenerate the filter 9 can be supplied neither too much nor too less, while compensating for the influence due to variations in density of intake air. As a result, a stable combustion of particulate matters can be ensured in the filter 9, to appropriately regenerate the filter 9. Further, since the target opening THCMDON for the regenerating operation is corrected to be a larger value as the detected engine water temperature TW is lower, a stable combustion can be ensured in the combustion chamber 3c, particularly, at low temperatures, while compensating for the influence due to the temperature of the internal combustion engine 3 to prevent misfire.

It should be understood that the present invention is not limited to the embodiment described above, but can be practiced in a variety of manners. For example, while the target opening THCMDON for the throttle valve 7 during the regenerating operation is corrected in accordance with all of the engine water temperature TW, atmospheric pressure PA, and intake air temperature TA in the foregoing embodiment, the target opening THCMDON may be corrected in accordance with arbitrary one or two of these parameters.

The atmospheric pressure correction table, intake air temperature correction table, and water temperature correction table shown in Figs. 5 to 7 are illustrative in any way, and may be changed as appropriate in accordance with the characteristics and the like of the applied engine 3 and filter 9, as a matter of course. For example, while the water temperature correction table of Fig. 7 is set such that the water temperature correction coefficient KTW is larger as the engine water temperature TW is lower from a viewpoint of the stability of the combustion state in the engine at low temperatures, the water temperature correction coefficient KTW can be set to a smaller value, conversely, in consideration of the influence on the exhaust gas temperature. Further, while the foregoing embodiment has employed the engine water temperature TW for a parameter indicative of the temperature of the internal combustion engine 3, an oil temperature of the engine 3 and the like may be used instead of or in addition to this.

Also, in the foregoing embodiment, the unburnt fuel is supplied into exhaust gases through the post-injection into the combustion chamber 3c using the injector 6. Alternatively, a separate injector may be disposed at a position upstream of the oxidation catalyst 8 in the exhaust pipe 5 to directly inject the fuel into the exhaust pipe 5.

Further, wile the foregoing embodiment has shown an example in which the present invention is applied to a diesel engine, the present invention is not limited to this particular engine, but can be applied to a variety of engines other than the diesel engine, including an engine for vessel propeller such as an outboard engine which has a crank shaft arranged in the vertical direction. Otherwise, details in the configuration may be modified as appropriate without departing from the scope of the present invention.

An exhaust gas purifying apparatus and method for an internal combustion engine are provided for appropriately regenerating a filter by supplying neither too much nor too less intake air when the filter is regenerated by supplying an unburnt fuel into exhaust gases. A filter is disposed in the exhaust system for collecting particulate matters included in exhaust gases. An ECU instructs to burn particulate matters deposited in the filter to execute a regenerating operation for regenerating the filter. An intake throttle valve adjusts the amount of intake air flowing through an intake system of the internal combustion engine. The ECU controls the intake throttle valve to narrow down an opening of the intake throttle valve during execution of the regenerating operation by the regenerating operation executing means. The ECU also corrects the opening of the intake throttle valve in accordance with at least one of the temperature of the internal combustion engine, the atmospheric pressure, and the intake air temperature detected by at least one of sensors.

## Claims

1. An exhaust gas purifying apparatus for an internal combustion engine (3) for purifying exhaust gases by collecting particulate matters included in the exhaust gases emitted from said internal combustion engine (3) to an exhaust system (5), said exhaust gas purifying apparatus comprising:
a filter (9) disposed in said exhaust system (5) for collecting particulate matters included in exhaust gases;
regenerating operation executing means (2) for burning particulate matters deposited in said filter (9) to execute a regenerating operation for regenerating said filter (9); and
an intake throttle valve (7) for adjusting the amount (QA) of intake air flowing through an intake system (4) of said internal combustion engine (3); and
engine temperature detecting means (29) for detecting a temperature (TW) of said internal combustion engine (3), atmospheric pressure detecting means (37) for detecting the atmospheric pressure (PA), and intake air temperature detecting means (33) for detecting the temperature (TA) of intake air;
**characterized by**
intake air control means (2, 7a) for controlling said intake throttle valve (7) to narrow down an opening (AP) of said intake throttle valve (7) during execution of the regenerating operation by said regenerating operation executing means (2) and supplying unburnt fuel into the exhaust gas; and
correcting means (2) for correcting the opening (AP) of said intake throttle valve (7) during the regeneration operation in accordance with at least one (TW) of the temperature (TW) of said internal combustion engine (3), the atmospheric pressure (PA), and the intake air temperature (TA) detected by at least one (29) of said detecting means.

2. An exhaust gas purifying apparatus for an internal combustion engine according to claim 1, wherein:
said at least one detecting means (29) is said engine temperature detecting means (29),
wherein said correcting means (2) corrects the opening (AP) of said intake throttle valve (7) to be larger as the temperature (TW) of said internal combustion engine (3) is lower.

3. A method of purifying exhaust gases in an internal combustion engine (3) by collecting particulate matters included in the exhaust gases emitted from said internal combustion engine (3) to an exhaust system (5), said method comprising the steps of:
collecting particulate matters included in exhaust gases (5) by a filter (9);
burning particulate matters deposited in said filter (9) to execute a regeneration operation for regenerating said filter (9);
adjusting the amount (QA) of intake air flowing through an intake system (4) of said internal combustion engine (3) by an intake throttle valve (7) and supplying unburnt fuel into the exhaust gas; and
detecting a temperature (TW) of said internal combustion engine (3), the atmospheric pressure (PA), and the temperature of intake air (TA);
**characterized by**
narrowing down an opening (AP) of said intake throttle (7) valve during execution of a regenerating operation; and
correcting the opening (AP) of said intake throttle valve (7) during the regeneration operation in accordance with at least one (TW) of the temperature (TW) of said internal combustion engine (3), the atmospheric pressure (PA), and the intake air temperature (TA).

4. A method of purifying exhaust gases in an internal combustion engine according to claim 3, wherein:
said step of detecting includes detecting the temperature (TW) of said internal combustion engine (3),
wherein said step of correcting includes correcting the opening (AP) of said intake throttle valve (7) to be larger as the temperature (TW) of said internal combustion engine (3) is lower.

5. An exhaust gas purifying apparatus for an internal combustion engine according to claim 1, wherein said regeneration operation for regenerating said filter (9) is executed by supplying unburnt fuel into the exhaust gases.

6. A method of purifying exhaust gases in an internal combustion engine according to claim 3, wherein said regeneration operation for regenerating said filter (9) is executed by supplying unburnt fuel into the exhaust gases.

## Patentansprüche

1. Abgasreinigungsvorrichtung für einen Verbrennungsmotor (3) zum Reinigen von Abgasen durch Sammeln von Partikelmaterialien, die in den vom Verbrennungsmotor (3) an ein Abgassystem (5) abgegebenen Abgasen enthalten sind, wobei die Abgasreinigungsvorrichtung umfasst:
einen Filter (9), der in dem Abgassystem (5) angeordnet ist, um in den Abgasen enthaltene Partikelmaterialien zu sammeln;
ein Regenerationsbetriebausführungsmittel (2) zum Verbrennen der in dem Filter (9) abgelagerten Partikelmaterialien, um einen Regenerationsbetrieb zum Regenerieren des Filters (9) auszuführen; und
ein Einlassdrosselventil (7) zum Einstellen der Menge (QA) von Ansaugluft, die durch ein Ansaugsystem (4) des Verbrennungsmotors (3) fließt; und
ein Motortemperaturerfassungsmittel (29) zum Erfassen einer Temperatur (TW) des Verbrennungsmotors (3), ein Atmosphärendruckerfassungsmittel (37) zum Erfassen des Atmosphärendrucks (PA) sowie ein Ansauglufttemperaturerfassungsmittel (33) zum Erfassen der Temperatur (TA) der Ansaugluft;
**gekennzeichnet durch**
ein Ansaugluftsteuermittel (2, 7a) zum Steuern des Einlassdrosselventils (7) zum Verengen einer Öffnung (AP) des Einlassdrosselventils (7) während der Ausführung des Regenerationsbetriebs **durch** das Regenerationsbetriebausführungsmittels (2) und Leiten von unverbranntem Kraftstoff in das Abgas; und
ein Korrekturmittel (2) zum Korrigieren der Öffnung (AP) des Einlassdrosselventils (7) während des Regenerationsbetriebs gemäß zumindest einer/s (TW) der Temperatur (TW) des Verbrennungsmotors (3), des Atmosphärendrucks (PA) und der Ansauglufttemperatur (TA), die durch zumindest eines (29) der Erfassungsmittel erfasst werden.

2. Abgasreinigungsvorrichtung für einen Verbrennungsmotor gemäß Anspruch 1, worin:
das zumindest eine Erfassungsmittel (29) ein Motortemperaturerfassungsmittel (29), ist,
worin das Korrekturmittel (2) die Öffnung (AP) des Einlassdrosselventils (7) so korrigiert, dass sie größer wird, wenn die Temperatur (TW) des Verbrennungsmotors (3) niedriger wird.

3. Verfahren zum Reinigen von Abgasen in einem Verbrennungsmotor (3) durch Sammeln von Partikelmaterialien, die in den von Verbrennungsmotor (3) an ein Abgassystem (5) abgegebenen Abgasen enthalten sind, wobei das Verfahren die Schritte umfasst:
Sammeln von in den Abgasen (5) enthaltenen Partikelmaterialien mit einem Filter (9);
Verbrennen von in dem Filter (9) abgesetzten Partikelmaterialien, um einen Regenerationsbetrieb zum Regenerieren des Filters (9) auszuführen;
Einstellen der Menge (QA) der Ansaugluft, die durch ein Ansaugsystem (4) des Verbrennungsmotors (3) fließt, mit einem Einlassdrosselventil (7) und Leiten von unverbranntem Kraftstoff in das Abgas; und
Erfassen einer Temperatur (TW) des Verbrennungsmotors (3), des Atmosphärendrucks (PA), und der Ansauglufttemperatur (TA); **gekennzeichnet durch**
Verengen einer Öffnung (AP) eines Drosselventils (7) während der Ausführung eines Regenerationsbetriebs; und
Korrigieren der Öffnung (AP) des Einlassdrosselventils (7) während des Regenerationsbetriebs gemäß zumindest einer/m (TW) der Temperatur (TW) des Verbrennungsmotors (3), des Atmosphärendrucks (PA) und der Ansauglufttemperatur (TA).

4. Verfahren zum Reinigen von Abgasen in einem Verbrennungsmotor gemäß Anspruch 3, worin:
der Schritt des Erfassens enthält, die Temperatur (TW) des Verbrennungsmotors (3) zu erfassen;
worin der Schritt des Korrigierens enthält, die Öffnung (AP) des Einlassdrosselventils (7) so zu korrigieren, dass sie größer wird, wenn die Temperatur (TW) des Verbrennungsmotors (3) niedriger wird.

5. Abgasreinigungsvorrichtung für einen Verbrennungsmotor gemäß Anspruch (1), worin der Regenerationsbetrieb zum Regenerieren des Filters (9) ausgeführt wird, indem den Abgasen unverbrannter Kraftstoff zugeführt wird.

6. Verfahren zum Reinigen von Abgasen in einem Verbrennungsmotor gemäß Anspruch 3, worin der Regenerationsbetrieb zum Regenerieren des Filters (9) ausgeführt wird, indem den Abgasen unverbrannter Kraftstoff zugeführt wird.

## Revendications

1. Appareil de purification des gaz d'échappement pour un moteur à combustion interne (3) pour purifier les gaz d'échappement par collecte des matières particulaires incluses dans les gaz d'échappement émis depuis ledit moteur à combustion interne (3) vers un système d'échappement (5), ledit appareil de purification des gaz d'échappement comprenant :
un filtre (9) disposé dans ledit système d'échappement (5) pour collecter les matières particulaires incluses dans les gaz d'échappement ;
des moyens d'exécution d'opération de régénération (2) pour brûler les matières particulaires déposées dans ledit filtre (9) pour exécuter une opération de régénération pour régénérer ledit filtre (9) ; et
un papillon des gaz d'admission (7) pour ajuster la quantité (QA) d'air d'admission circulant dans un système d'admission (4) dudit moteur à combustion interne (3) ; et
des moyens de détection de température de moteur (29) pour détecter une température (TW) dudit moteur à combustion interne (3), des moyens de détection de pression atmosphérique (37) pour détecter la pression atmosphérique (PA) et des moyens de détection de température d'air d'admission (33) pour détecter la température (TA) de l'air d'admission ;
**caractérisé par**
des moyens de contrôle de l'air d'admission (2, 7a) pour contrôler ledit papillon des gaz d'admission (7) pour rétrécir une ouverture (AP) dudit papillon des gaz d'admission (7) lors de l'exécution de l'opération de régénération par lesdits moyens d'exécution d'opération de régénération (2) et fournir le carburant non brûlé dans les gaz d'échappement ; et
des moyens de correction (2) pour corriger l'ouverture (AP) dudit papillon des gaz d'admission (7) lors de l'opération de régénération selon au moins l'une (TW) parmi la température (TW) dudit moteur à combustion interne (3), la pression atmosphérique (PA) et la température d'air d'admission (TA) détectée par au moins l'un (29) desdits moyens de détection.

2. Appareil de purification des gaz d'échappement pour un moteur à combustion interne selon la revendication 1, dans lequel :
ledit au moins un moyen de détection (29) est lesdits moyens de détection de température de moteur (29),
dans lequel lesdits moyens de correction (2) corrigent l'ouverture (AP) dudit papillon des gaz d'admission (7) pour qu'elle soit plus grande lorsque la température (TW) dudit moteur à combustion interne (3) est plus basse.

3. Procédé de purification des gaz d'échappement dans un moteur à combustion interne (3) par la collecte des matières particulaires incluses dans les gaz d'échappement émis dudit moteur à combustion interne (3) vers un système d'échappement (5), ledit procédé comprenant les étapes consistant à :
collecter les matières particulaires incluses dans les gaz d'échappement (5) par un filtre (9) ;
brûler les matières particulaires déposées dans ledit filtre (9) pour exécuter une opération de régénération pour régénérer ledit filtre (9) ;
ajuster la quantité (QA) d' air d'admission circulant dans un système d'admission (4) dudit moteur à combustion interne (3) par un papillon des gaz d'admission (7) et fournir le carburant non brûlé dans les gaz d'échappement ; et
détecter une température (TW) dudit moteur à combustion interne (3), la pression atmosphérique (PA) et la température de l'air d'admission (TA) ;
**caractérisé par** les étapes consistant à
rétrécir une ouverture (AP) dudit papillon des gaz d'admission (7) lors de l'exécution d'une opération de régénération ; et
corriger l'ouverture (AP) dudit papillon des gaz d'admission (7) lors de l'opération de régénération selon au moins l'une (TW) de la température (TW) dudit moteur à combustion interne (3), la pression atmosphérique (PA), et la température d'air d'admission (TA).

4. Procédé de purification des gaz d'échappement dans un moteur à combustion interne selon la revendication 3, dans lequel :
ladite étape de détection comprend la détection de la température (TW) dudit moteur à combustion interne (3),
où ladite étape de correction comprend la correction de l'ouverture (AP) dudit papillon des gaz d'admission (7) pour qu'elle soit plus grande lorsque la température (TW) dudit moteur à combustion interne (3) est plus basse.

5. Appareil de purification des gaz d'échappement pour un moteur à combustion interne selon la revendication 1, dans lequel ladite opération de régénération pour régénérer ledit filtre (9) est exécutée en fournissant le carburant non brûlé dans les gaz d'échappement.

6. Procédé de purification des gaz d'échappement dans un moteur à combustion interne selon la revendication 3, dans lequel ladite opération de régénération pour régénérer ledit filtre (9) est exécutée en fournissant le carburant non brûlé dans les gaz d'échappement.
